(19) Europäisches Patentamt
European Patent Office
Office européen des brevets

(11) EP 4 692 384 A1

(12) **EUROPEAN PATENT APPLICATION**
published in accordance with Art. 153(4) EPC

(43) Date of publication:
**11.02.2026 Bulletin 2026/07**

(21) Application number: **24778962.1**

(22) Date of filing: **27.02.2024**

(51) International Patent Classification (IPC):
**C22B 23/00** (2006.01)     **C22B 3/08** (2006.01)
**C22B 3/44** (2006.01)

(52) Cooperative Patent Classification (CPC):
**C22B 3/08; C22B 3/44; C22B 23/00;** Y02P 10/20

(86) International application number:
**PCT/JP2024/007031**

(87) International publication number:
**WO 2024/202821 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023053128**

(71) Applicant: **Mitsubishi Materials Corporation Tokyo 100-8117 (JP)**

(72) Inventors:
• **NAGATA Takuro**
  **Kagawa-gun, Kagawa 761-3110 (JP)**
• **TANAKA Fumito**
  **Tokyo 100-8117 (JP)**
• **SHIBATA Satoshi**
  **Kagawa-gun, Kagawa 761-3110 (JP)**

(74) Representative: **Gille Hrabal**
**Partnerschaftsgesellschaft mbB**
**Patentanwälte**
**Brucknerstraße 20**
**40593 Düsseldorf (DE)**

(54) **TIN RECOVERY METHOD**

(57) What is provided is a tin recovery method for recovering tin from a tin-containing material, the method including: an oxidation leaching step (S01) of performing oxidative leaching of tin in a tin-containing material into a leachate composed of an acidic solution of sulfuric acid to obtain a post-leaching liquid containing tin; an oxidation step (S02) of adding a substance that supplies sodium chloride and divalent copper ions to the post-leaching liquid obtained in the oxidation leaching step (S01) and oxidizing divalent tin ions contained in the post-leaching liquid to tetravalent tin ions; and a neutralization step (S03) of neutralizing the post-leaching liquid after the oxidation step (S02) to obtain a tin-containing precipitate.

FIG. 1

```
   ┌─────────────────────────┐
   │  TIN-CONTAINING MATERIAL │
   └─────────────────────────┘
              │
              ▼
   ┌─────────────────────────┐
   │  OXIDATION LEACHING STEP │───  S01
   └─────────────────────────┘
              │
              ▼
   ┌─────────────────────────┐
   │   POST-LEACHING LIQUID   │
   └─────────────────────────┘
              │
              ▼
   ┌─────────────────────────┐
   │      OXIDATION STEP      │───  S02
   └─────────────────────────┘
              │
              ▼
   ┌─────────────────────────┐
   │    NEUTRALIZATION STEP   │───  S03
   └─────────────────────────┘
              │
              ▼
   ┌─────────────────────────┐
   │  TIN-RECOVERED MATERIAL  │
   └─────────────────────────┘
```

EP 4 692 384 A1

**Description**

TECHNICAL FIELD

The present invention relates to a tin recovery method for recovering tin from a tin-containing material.

Priority is claimed on Japanese Patent Application No. 2023-053128, filed March 29, 2023, the content of which is incorporated herein by reference.

BACKGROUND ART

As a conventional method for recovering tin from a tin-containing material, for example, Patent Document 1 discloses a method in which tin is leached while oxidizing a tin-containing material (mainly containing tin and copper) in a NaOH solution, the tin-containing material being obtained by melting and reducing a raw material obtained by separating lead from dross generated in a lead smelting step, and tin is recovered from this tin leachate by electrowinning.

With regard to the method disclosed in Patent Document 1, when lead is contained in the tin-containing material, lead is leached together with tin, and since this lead is a more noble element than tin, lead is precipitated preferentially over tin during electrowinning, causing the problem that tin and lead cannot be separated. Furthermore, since NaOH is used for leaching, there is also a problem that the cost of chemicals is high.

Furthermore, Patent Documents 2 and 3 disclose methods for leaching copper smelting dust using hydrochloric acid or nitric acid, preferentially eluting copper and lead, while concentrating tin in a leaching residue, and recovering tin.

In the methods disclosed in Patent Documents 2 and 3, since tin is present as a solid after leaching, there is an advantage that tin can be easily recovered by solid-liquid separation, whereas there is a problem that the grade of tin in the obtained tin-recovered material is low because there are many elements that are not leached together with tin.

Thus, Patent Document 4 proposes a method of generating a tin precipitate and recovering tin by oxidizing and leaching tin in a tin-containing material in an acidic solution of sulfuric acid, and neutralizing the resulting post-leaching liquid.

In the method disclosed in Patent Document 4, tin can be efficiently recovered from a tin-containing material in which copper or lead is contained together with tin, and at the same time, while also enabling the production of a tin-recovered material with a higher grade of tin as compared to hydrochloric acid leaching or nitric acid leaching.

Citation List

Patent Documents

Patent Document 1: Japanese Patent No. 5188768
Patent Document 2: Japanese Unexamined Patent Application, First Publication No. 2019-151862
Patent Document 3: Japanese Unexamined Patent Application, First Publication No. 2019-151863
Patent Document 4: Japanese Unexamined Patent Application, First Publication No. 2022-130015

SUMMARY OF INVENTION

Technical Problem

Incidentally, in the method disclosed in Patent Document 4, in the post-leaching liquid obtained by oxidizing and leaching tin in a tin-containing material in an acidic solution of sulfuric acid, divalent tin ions and tetravalent tin ions coexist.

Here, the divalent tin ions are precipitated at a pH of 3.5 to 4.5, and the tetravalent tin ions are precipitated at a pH of 1.5 to 2.5.

In a case where the post-leaching liquid is neutralized to a pH of 3.5 to 4.5 in the neutralization step in order to recover the divalent tin ions as a precipitate, iron and aluminum contained in the post-leaching liquid are also precipitated, and there is a problem that the grade of tin to be recovered as a precipitate is lowered. Furthermore, there is a problem that the pH needs to be neutralized to 3.5 to 4.5, and the cost of chemicals increases.

On the other hand, in a case where the post-leaching liquid is neutralized to a pH of 1.5 to 2.5 in the neutralization step, the divalent tin ions cannot be recovered, and the recovery ratio of tin is significantly reduced.

The present invention was made in view of the above-described circumstances, and an object of the invention is to provide a tin recovery method that can efficiently recover high-grade tin from a tin-containing material.

Solution to Problem

In order to solve the above-described problem, a tin recovery method according to aspect 1 of the present invention is a tin recovery method for recovering tin from a tin-containing material, the method including:

an oxidation leaching step of performing oxidative leaching of tin in the tin-containing material into a leachate composed of an acidic solution of sulfuric acid to obtain a post-leaching liquid containing tin;
an oxidation step of adding a substance that supplies sodium chloride and divalent copper ions to the post-leaching liquid obtained in the oxidation leaching step and oxidizing divalent tin ions contained in the post-leaching liquid to tetravalent tin ions; and
a neutralization step of neutralizing the post-leaching liquid after the oxidation step to obtain a tin-containing precipitate.

According to the tin recovery method of aspect 1 of the present invention, since the method includes, before the neutralization step, an oxidation step of adding a substance that supplies sodium chloride and divalent copper ions to the post-leaching liquid obtained in the oxidation leaching step and oxidizing the divalent tin ions contained in the post-leaching liquid to tetravalent tin ions, the tin in the post-leaching liquid can be efficiently recovered as a precipitate by neutralizing the post-leaching liquid to a pH of 1.5 to 2.5 in the neutralization step. Furthermore, mixing of iron or aluminum into the tin precipitate can be suppressed, and high-grade tin can be recovered.

The tin recovery method according to aspect 2 of the present invention is the tin recovery method according to aspect 1, in which in the oxidation leaching step, a substance that supplies divalent or trivalent iron ions is added to the leachate.

In the oxidation leaching step, when the tin concentration in the leachate increases, metastannic acid may be precipitated, and the recovery ratio of tin may decrease. Furthermore, due to the generated metastannic acid, when the post-leaching liquid is separated through the filter, clogging of the filter is likely to occur. Furthermore, when iron is contained in the tin-containing material that serves as a raw material, iron is preferentially oxidized in the oxidation leaching step, and it may be difficult for leaching of tin to proceed.

Here, since the tin recovery method according to aspect 2 of the present invention is configured such that a substance that supplies divalent or trivalent iron ions is added to the leachate in the oxidation leaching step, oxidation of iron contained in the tin-containing material can be suppressed, and it is possible to efficiently carry out the leaching of tin. Furthermore, precipitation of metastannic acid in the oxidation leaching step can be suppressed, the recovery ratio of tin can be improved, and it is possible to suppress clogging of the filter.

Advantageous Effects of Invention

According to the present invention, a tin recovery method capable of efficiently recovering high-grade tin from a tin-containing material can be provided.

BRIEF DESCRIPTION OF DRAWINGS

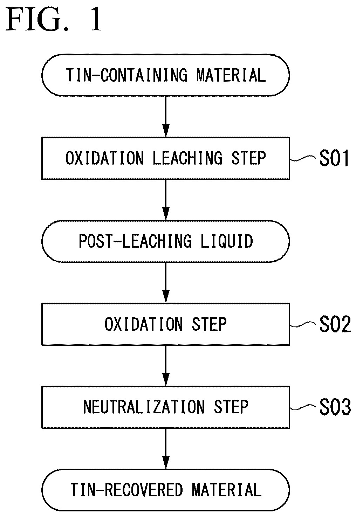

[FIG. 1] A flowchart showing a tin recovery method according to an embodiment of the present invention.

DESCRIPTION OF EMBODIMENTS

Hereinafter, an exemplary embodiment of the present invention will be described.

The tin recovery method according to the present embodiment is a method of recovering tin from a tin-containing material produced in, for example, a lead smelting process or a copper smelting process.

The tin recovery method according to the present embodiment includes, as shown in FIG. 1, an oxidation leaching step S01 of performing oxidative leaching of tin in a tin-containing material into a leachate composed of an acidic solution of sulfuric acid; an oxidation step S02 of oxidizing divalent tin ions contained in a post-leaching liquid obtained in the oxidation leaching step S01 to tetravalent tin ions; and a neutralization step S03 of neutralizing the post-leaching liquid after the oxidation step S02 to obtain a tin-containing precipitate.

(Oxidation leaching step S01)

In this oxidation leaching step S01, a tin-containing material is brought into contact with a leachate composed of an acidic solution of sulfuric acid containing sulfuric acid to thereby perform oxidative leaching of tin contained in the tin-containing material, and solid-liquid separation is performed to obtain a post-leaching liquid containing tin.

As the tin-containing material, for example, a crushed material of electronic substrates (crushed substrates), scrap such as solder scraps, sorted products of various scraps, and various smelting intermediate products can be used.

The sulfuric acid concentration in the acidic solution of sulfuric acid may be 1 g/L to 100 g/L, may be 100 g/L to 200 g/L, or may be 200 g/L to 400 g/L.

Here, in the obtained post-leaching liquid, divalent tin ions and tetravalent tin ions coexist.

In the present embodiment, it is preferable to add a substance that supplies divalent or trivalent iron ions to the leachate (acidic solution of sulfuric acid) in this oxidation leaching step S01.

By supplying divalent or trivalent iron ions to the leachate, oxidation of iron contained in the tin-containing material can be suppressed, and it is possible to promote oxidative leaching of tin.

Furthermore, even when the tin concentration in the leachate is high, precipitation of the metastannic acid can be suppressed, and it is possible to suppress clogging of the filter during solid-liquid separation.

Here, the concentration of the divalent or trivalent iron ions is preferably 1 g/L or more, and more preferably 5 g/L or more. On the other hand, the concentration of the divalent or trivalent iron ions is preferably 100 g/L or less, and more preferably 50 g/L or less.

The substance that supplies divalent or trivalent iron ions is not particularly limited. Specifically, for example, ferrous sulfate and ferric sulfate can be used.

In addition, in the sulfuric acid leaching step S01, it is preferable to stir while blowing air.

Here, it is preferable that the amount of air to be blown is within the range of 10 mL or more and 500 mL or less as a total amount with respect to 1 g of the amount of Sn to be recovered.

Furthermore, it is preferable that the stirring time is within the range of 1 hour or more and 10 hours or less.

(Oxidation step S02)

Next, a substance that supplies sodium chloride and divalent copper ions is added to the post-leaching liquid obtained as described above, and divalent tin ions contained in the post-leaching liquid are oxidized to tetravalent tin ions.

In this oxidation step S02, by co-adding sodium chloride and divalent copper ions, the divalent tin ions are efficiently oxidized to tetravalent tin ions by the catalysis of sodium chloride and divalent copper ions.

Here, the concentration of sodium chloride is preferably 0.1 mol/L or more, and more preferably 1.0 mol/L or more. On the other hand, the concentration of sodium chloride is preferably 10 mol/L or less, and more preferably 5 mol/L or less.

Furthermore, the concentration of the divalent copper ions is preferably 0.1 g/L or more, and more preferably 0.5 g/L or more. On the other hand, the concentration of the divalent copper ions is preferably 10 g/L or less, and more preferably 5 g/L or less.

The substance that supplies divalent copper ion is not particularly limited. For example, copper(II) sulfate pentahydrate can be used.

The substance that supplies sodium chloride and divalent copper ions may be added as a solid to the post-leaching liquid or may be added as a liquid.

The oxidation time in the oxidation step S02 may be 1 minute to 60 minutes, may be 60 minutes to 120 minutes, or may be 120 minutes to 180 minutes.

The oxidation step S02 may be carried out at 0°C to 30°C, may be carried out at 30°C to 60°C, or may be carried out at 60°C to 90°C.

(Neutralization step S03)

Next, a basic chemical is added to the post-leaching liquid to neutralize the post-leaching liquid, thereby obtaining a tin-containing precipitate. In the present embodiment, a basic chemical is added until the pH reaches 1.5 to 2.5. As a result, tetravalent tin ions are precipitated. On the other hand, iron or aluminum in the post-leaching liquid does not precipitate at a pH of 1.5 to 2.5 and remains dissolved.

Then, solid-liquid separation is performed after neutralization to obtain a tin-recovered material.

Here, as the basic chemical to be added, for example, an aqueous solution of sodium hydroxide can be used.

As the basic chemical, sodium hydroxide, magnesium hydroxide, or the like can be used.

The neutralization reaction time in the neutralization step S03 may be 1 minute to 60 minutes, may be 60 minutes to 120 minutes, or may be 120 minutes to 180 minutes.

The neutralization step S03 may be carried out at 0°C to 30°C, may be carried out at 30°C to 60°C, or may be carried out at 60°C to 90°C.

According to the tin recovery method of the present embodiment configured as described above, since the method includes, before the neutralization step S03, the oxidation step S02 of adding a substance that supplies sodium chloride and divalent copper ions to the post-leaching liquid obtained in the oxidation leaching step S01 and oxidizing the divalent tin ions contained in the post-leaching liquid to tetravalent tin ions, tin in the post-leaching liquid can be efficiently recovered as a tin-containing precipitate by neutralizing the post-leaching liquid to a pH of 1.5 to 2.5 in the neutralization step S03. Furthermore, the addition amount of the basic chemical can be reduced, and the chemical cost can be reduced.

In addition, contamination of iron or aluminum into the tin-containing precipitate can be suppressed, and high-grade tin can be recovered.

When the tin recovery method according to the present embodiment is configured that a substance that supplies divalent or trivalent iron ions is added to the leachate in the oxidation leaching step S01, oxidation of iron contained in the tin-containing material can be suppressed, and it is possible to efficiently perform leaching of tin. Furthermore, precipitation of metastannic acid in the oxidation leaching step S01 can be suppressed, the recovery ratio of tin can be improved, the occurrence of clogging of the filter can be suppressed, and solid-liquid separation can be performed satisfactorily.

The embodiment of the present invention has been described; however, the present invention is not limited to this and can be appropriately changed without departing from the technical ideas of the present invention.

Examples

A description will be given below of the results of verification experiments conducted to verify the effectiveness of the present invention.

(Example 1)

A tin-containing material was immersed in an acidic solution of sulfuric acid, and a post-leaching liquid containing 20 g/L of tin, 10 g/L of iron, and 1 g/L of aluminum was obtained.

In Invention Examples 1 to 3 and Comparative Examples 1 to 3, an oxidation step of adding each reagent such that the concentrations of sodium chloride and divalent copper ions would be the concentrations shown in Table 1 with respect to 100 mL of the post-leaching liquid, stirring the mixture while blowing air, and oxidizing divalent tin ions contained in the post-leaching liquid to tetravalent tin ions, was carried out. In the oxidation step, it was verified that the entire amount of divalent tin was oxidized to tetravalent tin, by using redox titration with iodine. In Comparative Example 4, the oxidation step was not carried out.

Thereafter, a 48 vol% NaOH solution was added to the post-leaching liquid, and the post-leaching liquid was neutralized to the pH shown in Table 1. After the neutralization treatment, solid-liquid separation was performed to obtain a liquid and a tin-recovered material.

Then, the tin concentration in the tin-recovered material was determined using ICP-AES. Table 1 shows the treatment conditions of the oxidation step and the neutralization step, the time required for the oxidation of tin, and the tin concentration in the tin-recovered material.

[Table 1]

| | Oxidation step | | | | Neutralization step | Tin-recovered material |
|---|---|---|---|---|---|---|
| | Presence or absence | NaCl (mol/L) | Cu(II) (g/L) | Oxidation time (min) | pH | Sn concentration (mass%) |
| Invention Example 1 | Present | 1.0 | 1.0 | 330 | 2.0 | 63 |
| Invention Example 2 | Present | 0.5 | 0.5 | 450 | 2.0 | 63 |
| Invention Example 3 | Present | 1.0 | 0.5 | 480 | 2.0 | 63 |
| Comparative Example 1 | Present | 0.0 | 1.0 | > 480 | - | - |
| Comparative Example 2 | Present | 1.0 | 0.0 | > 480 | - | - |
| Comparative Example 3 | Present | 0.0 | 0.0 | > 480 | - | - |
| Comparative Example 4 | Absent | - | - | - | 4.0 | 47 |

As shown in Table 1, in Comparative Example 4 in which the oxidation step was not carried out, the Sn concentration of the tin-recovered material was 47%. In contrast, in Invention Examples 1 to 3 in which the oxidation step was carried out by co-adding sodium chloride and divalent copper ions, the Sn concentration of the tin-recovered material was improved to 63%.

Furthermore, in Comparative Examples 1 to 3 in which sodium chloride and divalent copper ions were not co-added, oxidation did not proceed, and divalent tin could not be oxidized to tetravalent tin even after 480 minutes had elapsed. Therefore, the subsequent neutralization step was not carried out.

(Example 2)

250 g of a tin-containing material having a particle size of 3 mm or less and a tin concentration of 11% was impregnated with 1 L of an acidic solution of sulfuric acid having a sulfuric acid concentration of 100 g/L, subsequently $FeSO_4 \cdot 7H_2O$ or $Fe_2(SO_4)_3 \cdot nH_2O$ was added thereto such that the concentrations of divalent iron and trivalent iron reached the numerical values shown in Table 2, and the mixture was stirred while blowing air to carry out an oxidation leaching step.

The acidic solution was collected every 30 minutes and subjected to solid-liquid separation using a filter, and the tin concentration in the obtained acidic solution was measured by ICP-AES. The acidic solution was collected until the filter could no longer perform filtering due to clogging, and the time elapsed from the start of stirring to that time point was recorded as the time at which the fine particles were precipitated.

Table 2 shows the treatment conditions for oxidative leaching, the tin concentration in the obtained acidic solution, the tin recovery ratio, and the time until the filter could no longer perform filtering due to clogging. The recovery ratio of tin was determined by the following formula.

Recovery ratio (%) = [Amount of tin in acidic solution]/[Amount of tin in tin- containing material] $\times$ 100

[Table 2]

| | Oxidized leachate | | Post-leaching liquid | | Time of occurrence of clogging (min) |
|---|---|---|---|---|---|
| | Fe(II) (g/L) | Fe(III) (g/L) | Sn concentration (g/L) | Sn recovery ratio (%) | |
| Invention Example 11 | 10 | 0 | 20 | 73 | 330 |
| Invention Example 12 | 50 | 0 | 22 | 81 | > 540 |
| Invention Example 13 | 0 | 10 | 23 | 84 | 300 |
| Invention Example 14 | 0 | 50 | 25 | 93 | > 540 |
| Comparative Example 11 | 0 | 0 | 7 | 27 | 150 |

In Comparative Example 11 in which divalent or trivalent iron was not added in the oxidation leaching step, the time of occurrence of filter clogging was as short as 150 minutes, and the recovery ratio of tin was as low as 27%.

In contrast, in Invention Examples 11 to 14 in which divalent or trivalent iron was added in the oxidation leaching step, the time of occurrence of filter clogging was as long as 300 minutes or more, and the recovery ratio of tin was also as high as 73% or more. In particular, in Invention Examples 12 and 14 in which the addition amount of divalent or trivalent iron was 50 g/L, filter clogging did not occur even after 540 minutes had elapsed. Furthermore, the recovery ratio of tin was also high.

As a result of the above-described verification experiment, it was verified that, according to the present invention, it is possible to provide a tin recovery method that enables efficient recovery of high-grade tin from a tin-containing material.

INDUSTRIAL APPLICABILITY

A tin recovery method that enables efficient recovery of high-grade tin from a tin-containing material can be provided.

**Claims**

1. A tin recovery method for recovering tin from a tin-containing material, the method comprising:

    an oxidation leaching step of performing oxidative leaching of tin in the tin-containing material into a leachate composed of an acidic solution of sulfuric acid to obtain a post-leaching liquid containing tin;

an oxidation step of adding a substance that supplies sodium chloride and divalent copper ions to the post-leaching liquid obtained in the oxidation leaching step and oxidizing divalent tin ions contained in the post-leaching liquid to tetravalent tin ions; and

a neutralization step of neutralizing the post-leaching liquid after the oxidation step to obtain a tin-containing precipitate.

2. The tin recovery method according to Claim 1,
   wherein, in the oxidation leaching step, a substance that supplies divalent or trivalent iron ions is added to the leachate.

# FIG. 1

```
      ┌─────────────────────────────┐
      │    TIN-CONTAINING MATERIAL   │
      └─────────────────────────────┘
                     │
                     ▼
      ┌─────────────────────────────┐
      │   OXIDATION LEACHING STEP    │── S01
      └─────────────────────────────┘
                     │
                     ▼
      ┌─────────────────────────────┐
      │     POST-LEACHING LIQUID     │
      └─────────────────────────────┘
                     │
                     ▼
      ┌─────────────────────────────┐
      │       OXIDATION STEP         │── S02
      └─────────────────────────────┘
                     │
                     ▼
      ┌─────────────────────────────┐
      │     NEUTRALIZATION STEP      │── S03
      └─────────────────────────────┘
                     │
                     ▼
      ┌─────────────────────────────┐
      │    TIN-RECOVERED MATERIAL    │
      └─────────────────────────────┘
```

## INTERNATIONAL SEARCH REPORT

| International application No. |
| --- |
| **PCT/JP2024/007031** |

### A. CLASSIFICATION OF SUBJECT MATTER

*C22B 23/00*(2006.01)i; *C22B 3/08*(2006.01)i; *C22B 3/44*(2006.01)i
FI:  C22B23/00 102; C22B3/08; C22B3/44 101A; C22B3/44

According to International Patent Classification (IPC) or to both national classification and IPC

### B. FIELDS SEARCHED

Minimum documentation searched (classification system followed by classification symbols)

C22B23/00; C22B3/08; C22B3/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-130015 A (MITSUBISHI MATERIALS CORPORATION) 06 September 2022 (2022-09-06) | 1-2 |
| A | JP 2020-033626 A (DOWA METALS & MINING CO., LTD.) 05 March 2020 (2020-03-05) | 1-2 |

☐ Further documents are listed in the continuation of Box C. ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 April 2024** | **16 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/007031**

| Patent document cited in search report | | | Publication date (day/month/year) | Patent family member(s) | Publication date (day/month/year) |
|---|---|---|---|---|---|
| JP | 2022-130015 | A | 06 September 2022 | (Family: none) | |
| JP | 2020-033626 | A | 05 March 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023053128 A
- JP 5188768 B
- JP 2019151862 A
- JP 2019151863 A
- JP 2022130015 A